## Europäisches Patentamt

## European Patent Office

## Office européen des brevets

(11) Numéro de publication: **0 148 695**
**B1**

(12) **FASCICULE DE BREVET EUROPEEN**

(45) Date de publication du fascicule du brevet:
13.07.88

(51) Int. Cl.⁴: **F 24 J 2/34**

(21) Numéro de dépôt: **84402678.1**

(22) Date de dépôt: **20.12.84**

(54) **Chauffe-eau solaire pour le chauffage et le stockage par passage direct de l'eau et son procédé de fabrication.**

(30) Priorité: **06.01.84 FR 8400188**
**17.12.84 FR 8419250**

(43) Date de publication de la demande:
**17.07.85 Bulletin 85/29**

(45) Mention de la délivrance du brevet:
**13.07.88 Bulletin 88/28**

(84) Etats contractants désignés:
**BE DE GB IT NL SE**

(56) Documents cités:
**EP - A - 0 041 943**
**DE - A - 3 027 570**
**FR - A - 2 459 948**
**FR - A - 2 468 077**
**FR - A - 2 500 598**
**FR - A - 2 508 150**
**FR - A - 2 524 619**
**FR - A - 2 528 955**
**US - A - 4 281 637**
**US - A - 4 355 629**
**US - A - 4 423 718**

(73) Titulaire: **Liebard, Alain, 7, rue d'Argenteuil,**
**F-75001 Paris (FR)**

(72) Inventeur: **Liebard, Alain, 7, rue d'Argenteuil,**
**F-75001 Paris (FR)**

(74) Mandataire: **Lerner, François, 5, rue Jules Lefèbvre,**
**F-75009 Paris (FR)**

## Description

Le présente invention a pour objet un chauffe-eau solaire. Il s'agit en fait d'un chauffe-eau solaire pour le chauffage et le stockage par passage direct de l'eau, ne comportant pas d'échangeur de chaleur et formant un ensemble compact, performant et économique.

Le but recherché selon l'invention est de réaliser un chauffe-eau solaire à bon rendement, à faible coût, compact, ne nécessitant aucune servitude annexe, insensible au gel, pouvant être installé avec de très bonne performances indifféremment en région froide, tempérée ou tropicale.

Le chauffe-eau solaire pour le chauffage et le stockage par passage direct de l'eau, objet de l'invention, est du type comprenant:
– un ballon de stockage placé à l'intérieur d'une enceinte transparente, étanche et résistant à la pression atmosphérique
– un espace intermédiaire ménagé entre ledit ballon et l'enceinte, dans lequel espace un vide d'air a été réalisé,
– au moins deux raccordements hydrauliques d'entrée et de sortie de l'eau qui débouchent à l'extérieur du chauffe-eau en traversant de manière étanche l'enceinte, et
– au moins deux séries d'espaceurs disposés entre le ballon et l'enceinte et situés vers les deux extrémités du ballon (3), maintenant l'èpaisseur dudit espace vide.

Un tel type de chauffe-eau est connu notamment à partir du brevet US-A 4 281 637.

Toutefois on notera, dès à présent, que le chauffe-eau qui est décrit à ce brevet n'est pas destiné au chauffage et au stockage par passage direct de l'eau. Par contre le document FR-A 2 459 948 enseigne un tel chauffe-eau à raccordements hydrauliques qui relient le ballon de stockage à l'extérieur.

Le chauffe-eau du document français en question n'est pourtant pas adapté au cadre de l'invention en ce qu'il est dépourvu d'espaceur entre le ballon de stockage et l'enceinte.

Or, il est essentiel dans l'invention de prévoir de tels espaceurs. Du brevet US-A 4 281 637 précité, il est connu d'utiliser des espaceurs de maintien.

Cependant dans ce brevet les espaceurs ont la forme d'anneaux rigides qui entourent le ballon et viennent coopérer avec des dômes, également rigides, à section triangulaire, disposés en appui contre la paroi de l'enceinte extérieure.

Au brevet US-A 4 423 718, sont par ailleurs décrites des attaches métalliques de positionnement géométrique, à l'intérieur d'une enceinte de verre, d'une série de tubes dans lesquels circule un fluide caloporteur. Ces attaches se présentent chacune sous la forme d'épingle à cheveux déformable pour venir enserrer le tube correspondant et viennent porter par leurs extrémités d'épingle contre deux parois opposées de l'enceinte.

Il apparaît donc qu'aucun des documents connus ne décrit des espaceurs pouvant:

– d'une part absorber, par déformation, une partie au moins du poids du liquide contenu dans le ballon de stockage, lorsque celui-ci est rempli; de façon à éviter de venir exercer une contrainte excessive sur l'enceinte extérieure généralement en verre, et
– d'autre part, pendant la fabrication du chauffe-eau, être comprimés vers la paroi externe du ballon, et être maintenus temporairement dans cet état, afin de faciliter la mise en place du ballon dans l'enceinte, en évitant tout risque de rayure et donc de fragilisation de cette dernière, compte tenu des tolérances de fabrication relativement larges de l'enceinte de verre.

Enfin, accun de ces documents ne décrit ni ne suggère un mode de fixation des espaceurs invitant à les maintenir en position de sorte à éviter toute opération de fixation qui pourrait fragiliser la paroi qui les reçoit.

C'est afin de résoudre ces problèmes, auxquels aucune solution n'a été jusqu'à présent proposée et retenue, que l'invention prévoit que cesdits espaceurs se présentent sous la forme de ressorts et sont assujettis au ballon autour de sa paroi externe par l'intermédiaire d'une bande souple de maintien convenablement tendue.

Avantageusement, l'invention prévoit même que les espaceurs auront la forme générale d'un U comprenant une branche de fond réunie par deux branches de côté, ladite branche de fond comportant des échancrures pouvant recevoir, à travers elles, ladite bande souple de maintien des espaceurs autour du ballon, et lesdites branches de côté se terminant chacune par un pied enroulé sur luimême.

Une telle conception générale du chauffe-eau confère à l'appareil de très gros avantages d'exploitation par rapport aux chauffe-eau de l'art antérieur connu. Ces avantages proviennent notamment de l'excellente isolation thermique du ballon intérieur logé dans une enceinte en verre faiblement distante de la paroi extérieure du ballon dans laquelle enceinte règne un vide poussé.

Selon une caractéristique complémentaire de l'invention le chauffe-eau solaire comprend au moins un logement prévu pour recevoir l'un au moins desdits espaceurs, ledit logement étant formé par déformation locale, en creux ou en saillie, de la paroi interne de l'enceinte. De cette façon on assure un calage en rotation dans un sens et en translation dans les deux sens du ballon à l'intérieur de l'enceinte en verre, ce qui permet de travailler l'ensemble sur un tour au moment du soudage des calottes qui ferment les extrémités de l'enceinte, tout en assurant un blocage en translation du ballon dans l'enceinte facilitant les opérations de transport.

Au brevet US-A 4 291 637 sont également prévus des logements pour les espaceurs. Cependant, ces logements ne sont en aucun cas formés comme ceux de l'invention, ni n'assurent le même fonction en offrant les mêmes avantages.

Selon une autre caractéristique de l'invention, le ballon intérieur comprend deux fonds dont l'un au moins est de forme concave; ce qui facilite les opérations de fermeture de l'enceinte autour du ballon, et permet, d'autre part, de gagner en volume d'encombrement.

Selon une autre caractéristique de l'invention, les entrée et sortie d'eau se font par des raccordements élastiques flexibles, ce qui constitue une solution pour limiter les contraintes de dilatation pouvant s'exercer sur l'enceinte en verre.

L'invention se rapporte également à un procédé de fabrication du chauffe-eau comportant diverses étapes successives de mise en œuvre, selon la revendication 12.

L'invention, ses avantages et ses moyens de mise en œuvre apparaîtront plus clairement à l'aide de la description qui va suivre, faite en référence aux dessins annexés dans lesquels:

la fig. 1 montre en coupe élévation et de façon schématique un chauffe-eau réalisé selon l'invention,

la fig. 2 est une vue en coupe transversale faite selon la ligne II–II de la figure 1,

la fig. 3 montre en coupe longitudinale, couché parallèlement à son axe et plus en détail une variante de réalisation du chauffe-eau,

la fig. 4 est une vue de bout faite selon la flèche IV de la figure 3,

la fig. 5 est une vue en coupe faite selon le plan V–V de la figure 3,

la fig. 6 montre de façon schématique trois espaceurs fixés autour d'un ballon selon un mode de réalisation préféré et avant introduction du ballon dans l'enceinte en verre extérieure du chauffe-eau,

la fig. 7 montre un détail de la fixation d'un espaceur autour du ballon,

la fig. 8 montre à plus grande échelle le détail d'une extrémité d'un espaceur,

la fig. 9 est une vue par dessus faite selon la flèche IX de la figure 7,

la fig. 10 montre en coupe transversale de façon schématique comment est positionné au moyen des espaceurs le ballon à l'intérieur de l'enceinte lorsque le ballon n'est pas rempli d'eau,

la fig. 11 est une vue semblable à celle de la figure 10, mais lorsque le ballon est rempli d'eau, la fig. 12 montre en coupe longitudinale de façon schématique comment sont aménagées la sortie d'eau chaude et l'entrée d'eau froide dans le ballon,

la fig. 13 montre à petite échelle et de façon schématique comment peut être réalisé un logement pour un espaceur dans la paroi de l'enceinte,

les figures 14 et 15 sont des vues en coupe faites respectivement selon les plans XIV–XIV et XV–XV de la figure 13,

la figure 16 montre de façon schématique un procédé permettant de mettre en place le ballon à l'intérieur de son enceinte en verre,

la figure 17 montre en coupe le détail d'implantation du getter à une extrémité du ballon,

la figure 18 montre plus en détail et à plus grande échelle comment peut être réalisé et mis en place le getter.

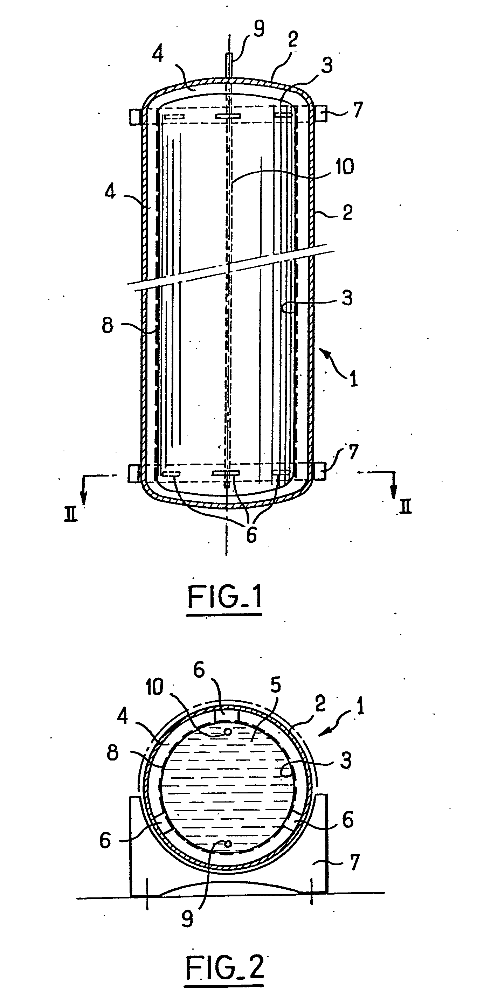

On se reportera tout d'abord aux figures 1 et 2 montrant la construction générale d'un chauffe-eau conçu selon l'invention.

Le chauffe-eau désigné 1 dans son ensemble comprend essentiellement une enceinte générale extérieure 2, transparente, étanche, résistant à la pression atmosphérique, soit environ 1 bar, et par exemple constituée en verre de borosilicate. A l'intérieur se trouve un ballon métallique 3 servant de réservoir de stockage à l'eau repérée en 5 (figure 2) et donc résistant aux corrosions de celle-ci et à la pression du réseau d'eau. Entre l'enceinte extérieure 2 et le ballon de stockage 3 existe un espace intermédiaire 4 entourant tout le ballon 3. Cet espace est de préférence d'épaisseur sensiblement constante et réduite, par exemple de l'ordre de 1 à quelques centimètres. Un vide d'air poussé, par exemple de l'ordre de $10^{-5}$ bars y a été réalisé au moment de la fabrication du ballon.

De façon à maintenir constante l'épaisseur de l'espacement 4 vide d'air, des espaceurs 6, par exemple métalliques, et convenablement fixés au ballon 3 sont placés vers les deux extrémités du ballon.

L'ensemble du chauffe-eau 1 peut reposer sur le sol, sur une toiture ou sur un support quelconque en étant posé par exemple parallèlement à son axe longitudinal au moyen de deux pièces 7 épousant le volume extérieur de l'enceinte 2 sur sa partie inférieure, celle-ci pouvant être cerclée sur sa partie supérieure pour une meilleure tenue. Les pièces 7 sont avantageusement placées sensiblement dans le même plan vertical que les espaceurs 6 de façon à reprendre les charges du stockage du ballon 3 sans effort pariculier pour l'enceinte, le ballon 3 formant poutre porteuse de la construction.

Le ballon de stockage 3 est revêtu d'une surface 8 absorbante et/ou sélective du rayonnement solaire sur toute sa surface extérieure. Ce revêtement peut être réalisé par une peinture, une immersion dans un bain électrolytique ou le collage d'un revêtement en feuille mince adhésive.

Deux raccordements hydrauliques sont prévus, à savoir une entrée d'eau froide en 9 et une sortie d'eau chaude en 10 débouchent dans le ballon de stockage 3 respectivement aux deux points les plus extrêmes en diagonale, de façon à éviter les mélanges d'eau chaude et d'eau froide et à soutirer l'eau la plus chaude en partie haute du ballon 3.

Le chauffe-eau 1 peut être indifféremment placé horizontalement dans l'axe nord–sud ou est–ouest, ou encore obliquement sur une toiture par exemple, en veillant dans ce dernier cas que la sortie d'eau chaude débouche bien dans la partie la plus haute du ballon.

A titre d'exemple un chauffe-eau conforme à l'invention peut être réalisé à partir d'une enceinte 2 en verre de borosilicate, de section circulaire de 200 mm de diamètre extérieur, de 5 mm d'épaisseur et de 3,10 m de longueur hors tout. Le ballon de stockage 3 est réalisé en acier inoxydable ou en acier noir revêtu, également de section circulaire de 170 mm de diamètre extérieur, de 2,5 mm d'épaisseur et de 3 m de longueur. L'espacement intermédiaire 4 est sensiblement constant y compris aux extrémités et de 10 mm d'épaisseur. Le revêtement 8 peut être du type film auto-collant sélectif. Dans une telle réalisation, le chauffe-eau aurait un volume de stockage de 66 litres pour une surface absorbante du rayonnement solaire de 0,50 m² projeté et une surface absorbante utile de 1,2 m² calculée sur la base des trois/quart de la surface totale du revêtement 8 qui est de 1,6 m².

Egalement toujours selon l'invention, des capacités de stockage et donc des productions d'eau chaude journalières supérieures peuvent être obtenues en jumelant plusieurs unités 1 conformes à la description précédante. Par exemple des chauffe-eau de 132 litres ou de 198 litres de capacité peuvent être réalisés en jumelant deux ou trois unités 1 sur un piètement commun et l'ensemble des connections hydrauliques ayant été réalisées à la fabrication.

Comme revêtement sélectif, on utilise un revêtement présentant un coefficient d'absorbtion $\alpha$ élevé et un coefficient d'émission $\varepsilon$ faible, par exemple $\alpha$ compris entre 0,95 et 0,98 et $\varepsilon$ compris entre 0,12 et 0,25.

L'eau stockée dans le ballon central est fortement chauffée directement au contact de la paroi chaude du ballon lorsque celle-ci reçoit le rayonnement solaire. Les coefficients de performance sont excellents puisque l'enceinte extérieure transparente et étanche assure l'effet de serre, l'espace intermédiaire 8 vide d'air annulant tout échange thermique par convection ou conduction, et le revêtement sélectif du ballon de stockage augmente l'absorbtion et diminuant les pertes par rayonnement.

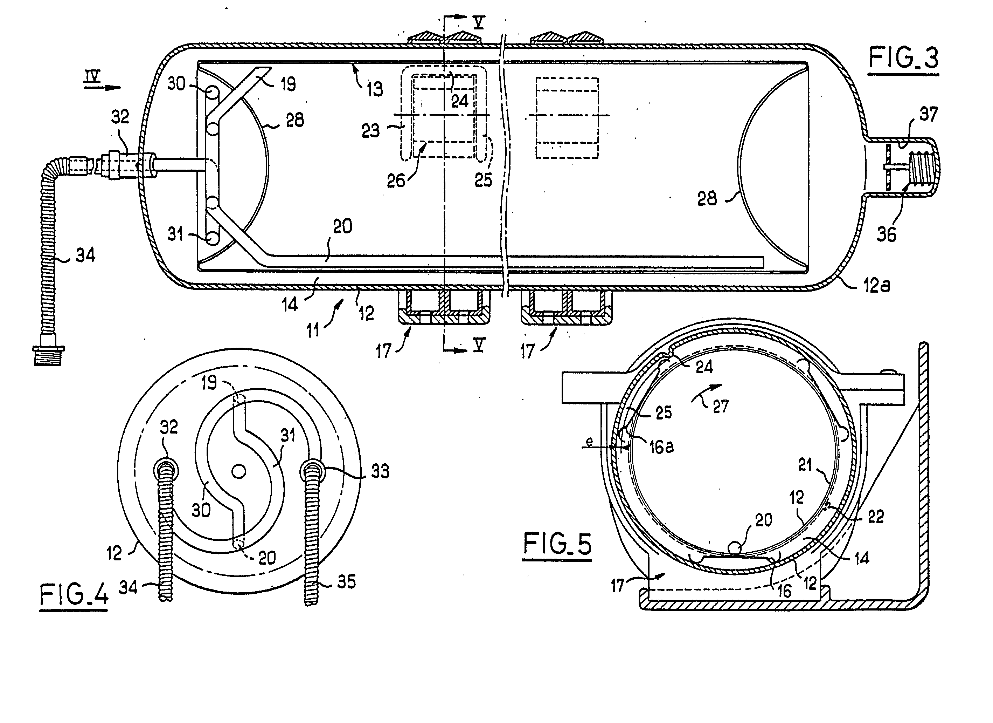

En se reportant aux figures 3 à 5 on décrira maintenant un mode de construction préféré.

Dans ces dessins, on a repéré par des nombres augmentés de 10 unités les éléments semblables du mode de réalisation des figures 1 et 2, et l'on ne redécrira pas en détail en conséquence tous ces éléments.

Par rapport au mode de réalisation schématique des figures 1 et 2, on observera essentiellement les caractéristiques pariculières suivantes du mode de réalisation des figures 3 à 5.

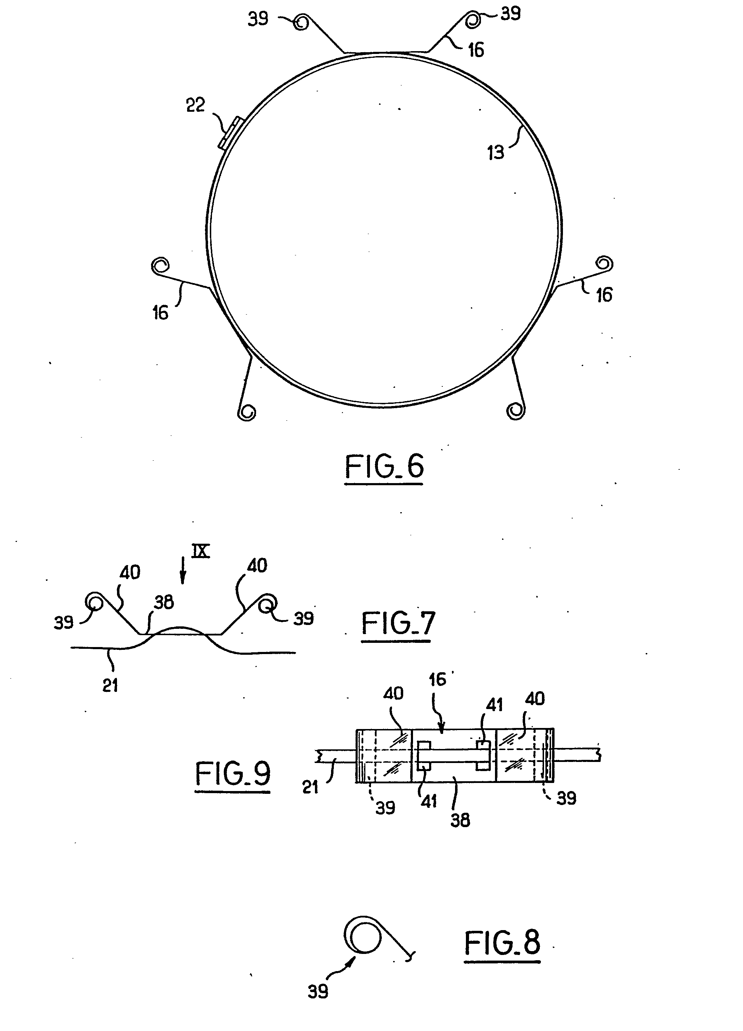

Les espaceurs 16 sont des lames ressorts qui ont été fixées autour du ballon 3 au moyen d'une bande souple 21 convenablement serrée en 22 selon des techniques classiques de fermeture de colis et de caisses. Le mode de fixation des espaceurs apparaîtra, du reste plus clairement, à l'occasion de la description des figures 6 à 9. De cette façon on évite des problèmes de soudure et de corrosion sur le ballon 3 des espaceurs 16.

Deux jeux de trois espaceurs 16 sont prévus vers les extrémités opposées du chauffe-eau. Dans la réalisation illustrée où le ballon fait environ 3 m de long, les espaceurs ont été fixés à environ 250 mm de chaque fond.

D'autre part, on constate, en examinant les figures 3 et 5, que l'un des espaceurs repéré 16a est positionné dans l'enceinte en verre 2 à l'intérieur d'un logement en forme générale de U dont les trois branches 23, 24, 25 ont été formées par déformation locale vers l'intérieur de la paroi de l'enceinte 2 sur une petite épaisseur e, par exemple de l'ordre de 3 à 4 mm. De cette façon l'espaceur est prisonnier à l'intérieur du logement 26 formé par ce U à trois branches 23, 24, 25 immobilisant le ballon en translation parallèlement à son axe à l'intérieur de l'enceinte 12. Cela permet également d'obtenir un blocage de la rotation du ballon 13 interdisant à ce dernier de tourner dans le sens de la flèche 27 par rapport à l'enceinte 12, et ce pour des raisons qui apparaîtront plus loin.

Les fonds 28, 29 du ballon 13 présentent leur concavité tournée vers l'extérieur, ce qui présente des avantages au niveau de l'encombrement hors tout du chauffe-eau et également au niveau de la fabrication, comme il apparaîtra plus loin.

Dans l'un des fonds creux 28, sont logés des conduits de raccordement 30, 31 respectivement avec l'entrée d'eau froide 20 et la sortie d'eau chaude 19, et les conduits 30, 31 sont formés en «queue de cochon» réalisant une jonction de sortie souple avec les traversées 32, 33 étanches de l'enceinte 12. Il est en effet nécessaire de prévoir une possibilité de dilatation du réservoir 13 avec ses conduits de raccordement par rapport é l'enceinte 12 tout en ne soumettant cette dernière qu'à des contraintes réduites.

En 34, 35 on a représenté des tubes souples de jonction pour le raccordement du chauffe-eau aux canalisations d'amenée d'eau froide et d'utilisation d'eau chaude du local à equiper, ces tuyaux souples ayant pour objet d'éviter au moment du raccordement du ballon à l'installation une rupture de la partie en verre du ballon soudée aux entrée et sortie d'eau.

A l'extrémité opposée de l'enceinte 12 on aperçoit un getter repéré dans son ensemble 36 logé à l'intérieur d'une protubérance 37 du fond correspondant 12a de l'enceinte 12 et dont la mise en œuvre et l'intérêt seront décrits plus en détail plus loin.

On se reportera maintenant aux figures 6 à 9 pour montrer plus en détail la réalisation des espaceurs 16.

On disposera, de préférence, vers chaque extrémité du ballon trois espaceurs 16 formés d'une lame ressort de forme générale en U, comportant un fond 38 réuni par deux branches 40 à deux pieds 39 enroulés. La fixation de chaque espaceur se fait par une bande souple 21 qui passe dans deux échancrures 41 formées dans le fond 38, et la bande souple 21 est serrée au moyen d'un dispositif de serrage 22 de tout type approprié connu. De cette façon les trois pieds espaceurs 16 peuvent être convenablement répartis à 120° les uns des autres autour du ballon 13 et y être fermement assujettis sans qu'il soit besoin de faire appel à aucune opération telle que soudage pouvant altérer la paroi du ballon.

Le détail de la figure 8 montre que de préférence, la lame ressort est enroulée sur elle-même sur au moins un tour complet. Ceci permet aux pieds enroulés 39 de présenter suffisamment de résistance pour éviter leur écrasement sous le poids du ballon rempli d'eau.

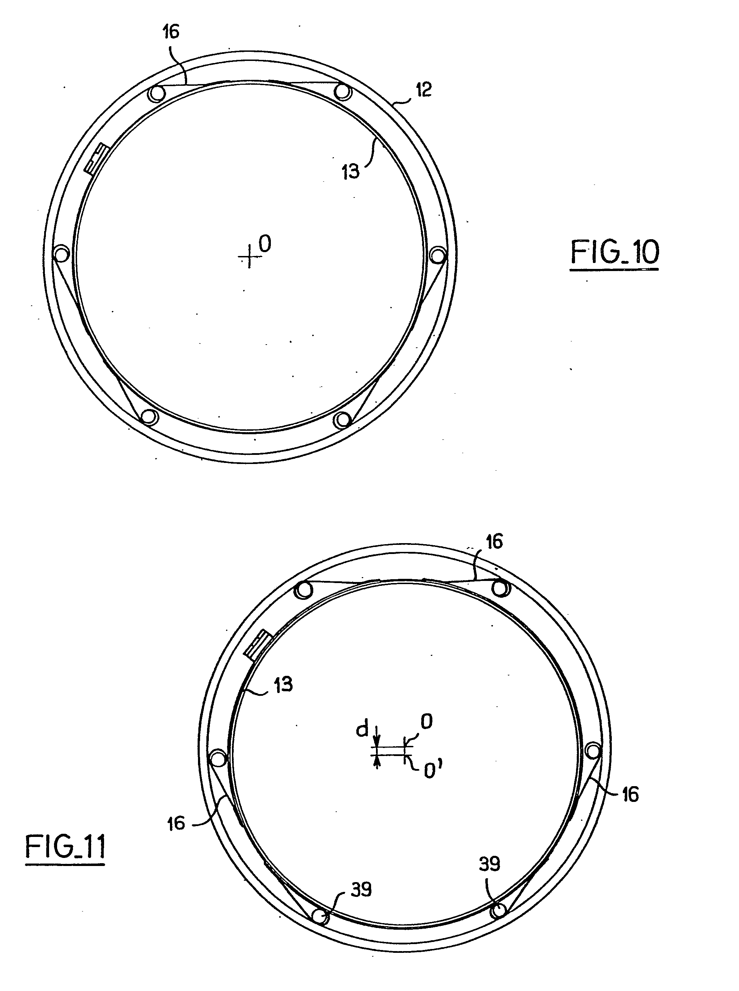

Ainsi, en se référant aux figures 10 et 11, on aperçoit les positions prises respectivement par le ballon 13, monté dans l'enceinte 12 et écarté d'elle par les espaceurs 16, lorsque le ballon est vide d'eau (figure 10) ou lorsque le ballon est plein d'eau (figure 11). Dans ce cas le ballon s'est quelque peu décentré (d) en venant porter sur, et déformer, mais cependant sans les écraser, les deux pieds 39 des deux espaceurs 16 montés en partie basse du ballon.

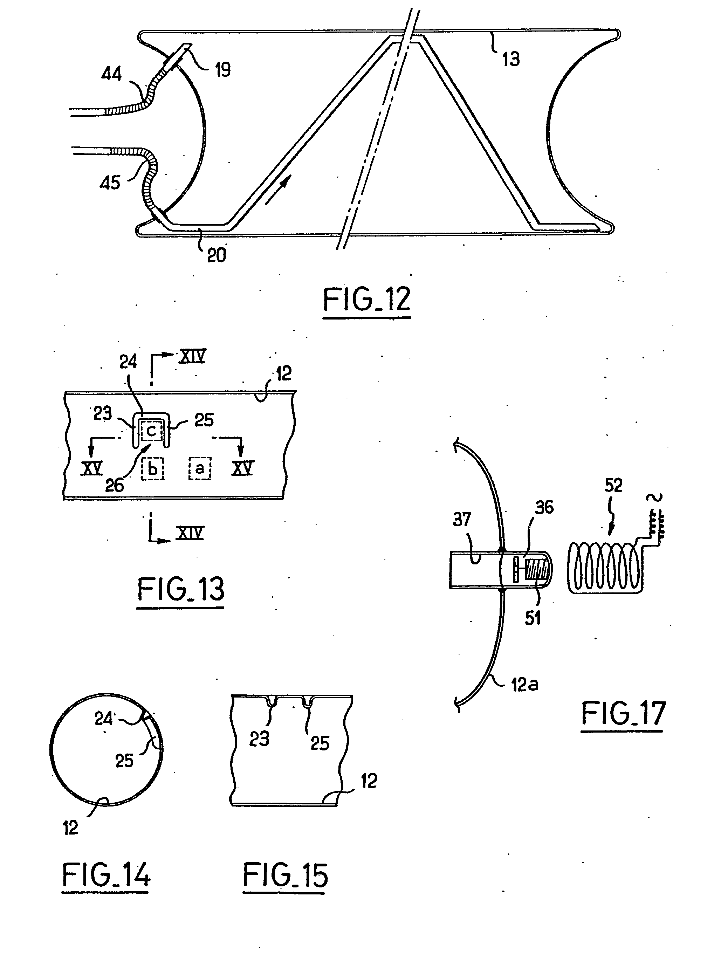

En faisant référence à la figure 12, on a montré schématiquement comment peuvent être aménagées la sortie d'eau chaude 19 et l'entrée d'eau froide 20, à l'intérieur du ballon 12.

Compte-tenu de la longueur importante du ballon par rapport à son diamètre, on donne avantageusement au conduit d'eau froide 20 un trajet sinueux, par exemple en hélice suivant la paroi interne du ballon, contre laquelle paroi il reste calé. Les connections devant traverser, de façon étanche, l'enceinte en verre (non représentée) peuvent être formées, comme illustré, par des conduits flexibles 44, 45 pour permettre les dilatations différentielles entre le ballon 13 et l'enceinte 12.

En se reportant aux figures 13 à 15, on a illustré le logement 26 formé dans la paroi de l'enceinte en verre 12 pour recevoir et caler une patte d'un espaceur 16. L'introduction de la patte dans l'espaceur se fait en amenant la patte dans la position repérée en a au voisinage de l'entrée du logement 26, en la poussant ensuite jusqu'à la hauteur de l'entrée du logement en b, et en faisant tourner ensuite le ballon 13 (dont la patte est solidaire) à l'intérieur de l'enceinte 12 jusqu'à ce que la patte vienne en c se bloquer au fond du logement 26.

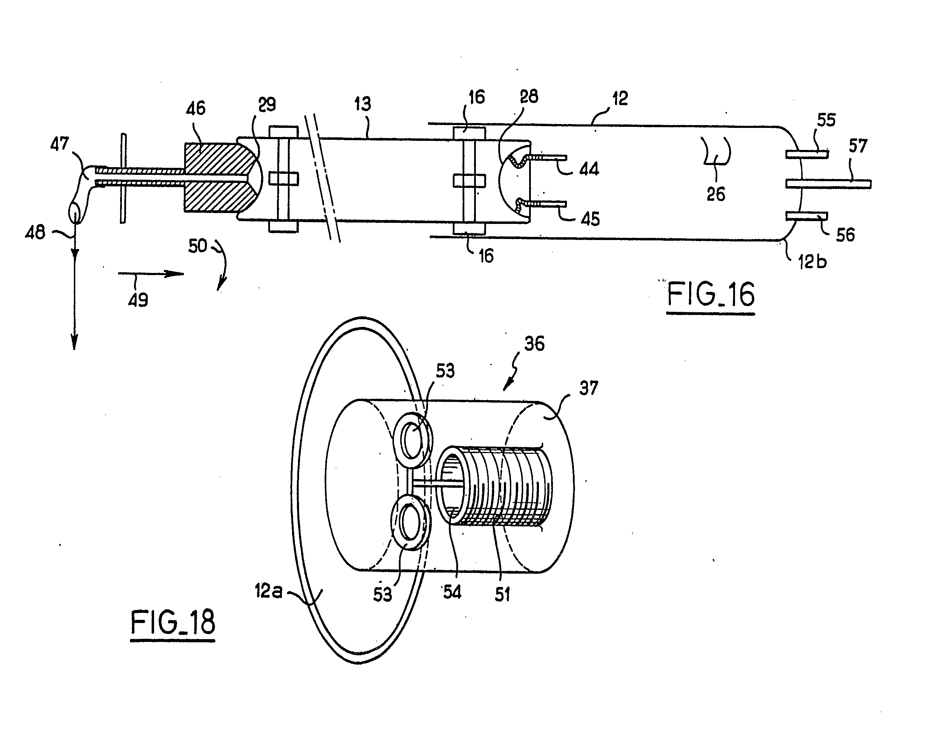

Le principe de la mise en place du ballon 13 dans l'enceinte 12 va être maintenant décrit plus en détail, en faisant référence à la figure 16.

On supposera tout d'abord que l'enceinte 12 est déjà en partie réalisée avec un fond 12b déjà soudé. (On décrira plus loin l'ensemble des opérations successives à mettre en œuvre pour la fabrication complète d'un chauffe-eau).

Le ballon 13, équipé de ses sorties d'eau chaude et d'eau froide, telles par exemple que 44, 45, est enfilé à l'intérieur de l'enceinte 12 en étant saisi par son fond 29 au moyen d'une ventouse 46, reliée par un conduit 47 à une pompe à vide, comme indiqué par la flèche 48.

Les pattes 16 des espaceurs sont provisoirement rabattues contre la paroi du ballon 13 par un lien souple (non représenté) jusqu'à ce que les pattes soient engagées dans l'ouverture de l'enceinte 12. Le lien souple extérieur est alors retiré et l'ensemble est avancé, comme indiqué par la flèche 49, jusqu'à ce que le deuxième jeu des pattes 16 soient également engagé dans l'ouverture. On continue alors à pousser l'ensemble du ballon 13 jusqu'à ce que les pattes 16 viennent à la hauteur du logement 26. A ce moment, on fait tourner le ballon 13 dans le sens de la flèche 50 pour faire pénétrer la patte d'espaceur correspondante dans le logement 26, comme il avait été expliqué en relation aux figures 13 à 15.

On se référera maintenant aux figures 17 et 18 expliquant l'utilisation du getter.

Comme il est bien connu dans la technique des vides poussés, on peut parfaire le vide à l'intérieur d'une enceinte en y vaporisant certains éléments lorsqu'un vide déjà relativement important a été établi. Par exemple, on peut ainsi vaporiser du baryum dans une enceinte dans laquelle on a effectué un vide relatif de l'ordre de $10^{-4}$ bar, de manière à amener ce vide à une valeur plus poussée, par exemple, de l'ordre de $10^{-6}$ bar. En outre, le «flashage» du baryum sur les parois voisines en verre de l'enceinte crée une couleur réfléchissante argentée formant témoin de vide. En effet, en cas de fuite et d'introduction d'air dans l'enceinte, le baryum avide d'oxygène s'oxyde et devient blanchâtre.

La vaporisation du baryum peut se faire au moyen d'un enroulement électrique 51 qui permettra d'échauffer la substance vaporisable du getter 36 lorsqu'une self d'induction 52 (figure 17) sera appliquée à l'extérieur autour de l'enroulement 51. Le montage pratique peut se faire comme illustré à la figure 18 en prévoyant l'enroulement 51 d'alimentation d'une résistance chauffante permettant de chauffer des résistances 53 sur lesquelles le baryum a été préalablement déposé, l'enroulement 51 étant formé sur un petit cylindre en verre 54, lui-même soudé au fond du logement 37 également en verre, lui-même soudé à la calotte 12a.

On décrira maintenant en relation aux diverses figures les diverses opérations successives qui doivent être réalisées pour fabriquer le chauffe-eau.

On réalise séparément des cylindres de verre constituant la partie principale de l'enceinte 12, pouvant avoir par exemple un diamètre extérieur de 200 mm et une épaisseur de paroi de 5 mm, de façon à pouvoir résister à l'écrasement de la pression atmosphérique lorsque l'enceinte sera mise sous vide.

On réalise également séparément les calottes d'extrémité telles que 12a, 12b qui devront coiffer et fermer l'enceinte 12. La calotte 12b devra comprendre (figure 16) deux tubes en verre 55, 56 dans lesquels s'engageront les tuyaux 44, 45 d'entrée et de sortie d'eau du ballon. Cette calotte peut comporter également un troisième tube en verre 57 par lequel sera créé le vide dans l'enceinte.

On réalise séparément le ballon 13 dont le diamètre extérieur est légèrement inférieur au diamètre intérieur de l'enceinte. Par exemple, le diamètre extérieur du ballon peut être de l'ordre de 170 mm. Il est réalisé, de préférence en acier et il doit être susceptible de résister à la pression de tarage de l'eau (en général 9 bars) augmentée d'un bar correspondant au vide réalisé dans l'enceinte 12.

Le ballon 13 est équipé de ses fonds et de ses conduits d'entrée et sortie d'eau avec ses liaisons flexibles. Deux tuyaux 44, 45 font saillie à une extrémité pour sortir à travers les tubes 55, 56 de la calotte 12b.

L'enceinte 12 comporte également, qui peut être formé en creux ou en relief sur sa paroi interne, le logement 26 pour le calage d'au moins un espaceur 16 ou d'un de ses pieds 39.

On soude la calotte 12b au tube 12.

On équipe le ballon 13 de ses séries d'espaceurs 16 que l'on maintient serrés par une bande souple provisoire.

On introduit par translation axiale le ballon 13 dans l'enceinte 12 en libérant la bande souple quand les espaceurs sont entrés dans le cylindre, ce qui permet d'engager convenablement le ballon 13 avec ses espaceurs 16 dans l'enceinte 12 sans la rayer (ce qui pourrait fragiliser le verre).

Lorsque le ballon 13 est convenablement engagé dans l'enceinte 12, on fait tourner légèrement sur lui-même, comme illustré à la figure 16 le ballon 13 dans l'enceinte 12 de façon à venir bloquer l'espaceur correspondant dans le logement 26. Simultanément on a pris la précaution de faire sortir les tuyaux souples 44, 45 par les tubes 55, 56 de la calotte 12b.

Le ballon 13 étant ainsi convenablement positionné et calé dans l'enceinte 12, on peut retirer la vantouse 46 ayant servi à son introduction, et l'on peut mettre en place l'autre calotte 12a que l'on pourra souder à la paroi contiguë 12 de l'enceinte en faisant tourner l'ensemble du chauffe-eau sur un tour pour réaliser une bonne soudure et un chauffage homogène de la calotte sur l'enceinte 12. Les fonds concaves du ballon permettent d'éviter des phénomènes de surchauffe qui pourraient être néfastes notamment au revêtement absorbant particulier du ballon. D'autre part, le getter 36 étant protégé dans son logement 37 n'est pas non plus soumis à une surchauffe intempestive lors de l'opération de fermeture de l'enceinte par soudage de la calotte 12a.

Lorsque ces opérations sont terminées, on commence à mettre l'enceinte sous vide par la tubulure 57 reliée à une source convenable de vide. Simultanément, on réalise la soudure des tubes 55 et 56 autour des tuyaux 44, 45 de sortie d'eau froide et d'eau chaude. Cette soudure est réalisée par simple chauffge des tubes 55, 56 qui, du fait de la dépression réalisée dans l'enceinte, viennent s'écraser contre les tubes 44, 45. On maintient un vide, par exemple de l'ordre de $10^{-4}$ bar tout en chauffant l'ensemble, par exemple vers 300°C dans un four pendant 3 à 4 heures, de manière à éviter tout dégazage dans le temps.

Après quoi, on scelle le tube 57 de mise sous vide et l'on procède au flashage vaporisation du getter pour parfaite le vide jusqu'à $10^{-6}$ bar. Le maintien de la couleur argentée du baryum vaporisé sur les parois adjacentes de l'enceinte est un garant du maintien du vide.

De nombreuses variantes de réalisation peuvent être apportées aux modes de construction, de montage et de fabrication décrits. En pariculier, les diverses solutions préconisées et décrites peuvent être combinées.

Par exemple, au niveau du soudage des calottes en verre aux deux extrémités des enceintes, on peut utiliser des rampes chauffantes pour éviter d'avoir à faire tourner sur lui-même l'ensemble de l'enceinte et du ballon de stockage.

De façon générale, l'emploi de matériaux synthétiques et plastiques sera proscrit à l'intérieur de l'enceinte sous vide, car ces matériaux dégazent dans le temps et feraient chuter les performances de l'appareil. Les matériaux utilisés seront donc essentiellement métalliques tels que acier, cuivre, etc...

De même le revêtement absorbant extérieur du ballon devra être capable de résister à l'échauffement du processus de montage de l'ensemble et de l'étuvage en fin d'opération de dégazage.

Au niveau des pieds extérieurs 17, on pourra par contre utiliser des matières plastiques souples telles que PVC qui réduiront les contraintes avec le verre et assureront également une réduction à cet endroit du pont thermique créé par la présence des organes espaceurs, dont la conductibilité est cependant très restreinte.

Compte-tenu de sa conception, le ballon peut être placé selon n'importe quelle orientation. Si une utilisation en position verticale est prévue, on prévoit alors avantageusement d'ajouter, du côté au moins du ballon qui sera placé en bas un matelas de laine de verre amortisseur qui permettra de supporter le ballon à l'intérieur de l'enceinte en reprenant la charge essentiellement sur la calotte inférieure qui sera évidemment convenablement reçue dans un berceau adéquat:

**Revendications**

1. Chauffe-eau solaire pour le chauffage et le stockage par passage direct de l'eau du type comprenant:

- un ballon (3, 13) de stockage placé à l'intérieur d'une enceinte (2, 12) transparente, étanche et résistant à la pression atmosphérique,
- un espace intermédiaire (4, 14) ménagé entre ledit ballon (3, 13) et l'enceinte (2, 12), dans lequel espace un vide d'air a été réalisé,
- au moins deux raccordements hydrauliques (9, 10, 19, 20) d'entrée et de sortie de l'eau qui débouchent à l'extérieur du chauffe-eau (1) en traversant de manière étanche l'enceinte (2, 12), et
- au moins deux séries d'espaceurs (6, 16) disposés entre le ballon (3, 13) et l'enceinte (2, 12) et situés vers les deux extrémités du ballon (3, 13), maintenant l'épaisseur dudit espace vide (4, 14), ledit chauffe-eau étant caractérisé en ce que lesdits espaceurs se présentent sous la forme de ressorts (16a) et sont assujettis au ballon (3, 13), autour de sa paroi externe, par l'intermédiaire d'une bande (21) souple de maintien convenablement tendue.

2. Chauffe-eau solaire selon la revendication 1, caractérisé en ce que lesdits espaceurs (16a) ont la forme générale d'un U comprenant une branche de fond (38) réunie par deux branches de côté (40), ladite branche de fond (38) comportant des échancrures (41) pouvant recevoir, à travers elles, ladite bande souple (21) de maintien des espaceurs (16a) autour du ballon (3, 13) et lesdites branches de côté (40) se terminant chacune par un pied (39) enroulé sur lui-même.

3. Chauffe-eau solaire selon la revendication 1 ou la revendication 2, caractérisé en ce qu'il comprend au moins un logement (26) prévu pour recevoir l'un au moins desdits espaceurs (6, 16), ledit logement étant formé par déformation locale, en creux ou en saillie, de la paroi interne de l'enceinte (2, 12).

4. Chauffe-eau solaire selon l'une quelconque des revendications 1 à 3, caractérisé en ce que l'enceinte (2, 12) est de section circulaire et est réalisé en verre de borosilicate, l'épaisseur dudit espace (4, 14) séparant le ballon (3, 13) de l'enceinte (2, 12) étant de l'ordre de 1 à quelques centimètres.

5. Chauffe-eau solaire selon l'une quelconque des revendications 1 à 4, caractérisé en ce que le ballon de stockage (3, 13) est revêtu à l'extérieur d'un film sélectif adhésif auto-collant.

6. Chauffe-eau solaire selon l'une quelconque des revendications 1 à 5, caractérisé en ce que des pieds support (7) du chauffe-eau sont placés dans le même plan vertical que les espaceurs (6).

7. Chauffe-eau solaire selon l'une quelconque des revendications 1 à 6, caractérisé en ce que le ballon intérieur (13) comprend deux fonds (28, 29) dont l'un au moins (28) est de forme concave.

8. Chauffe-eau solaire selon l'une quelconque des revendications 1 à 7, caractérisé en ce que les raccordements hydrauliques (9, 10, 19, 20) d'entrée et de sortie de l'eau relient le ballon (3) à l'extérieur du chauffe-eau, lesdites entrée et/ou sortie d'eau se faisant vers les extrémités opposées du ballon (13) par des raccordements non rectilignes, le tuyau (20) d'eau froide qui traverse le ballon (3, 13) sur presque toute sa longeur serpentant à l'intérieur de ce dernier.

9. Chauffe-eau solaire selon l'une quelconque des revendications 1 à 8, caractérisé en ce que les entrée et sortie d'eau (19, 20) se font par des raccordements élastiques flexibles (30, 31, 44, 45).

10. Chauffe-eau selon l'une quelconque des revendications 1 à 9, caractérisé en ce que l'enceinte (12) comporte à une de ses extrémités, dans son axe, un logement cylindrique circulaire (37) de diamètre réduit communiquant avec l'espace sous vide (14) compris entre l'enceinte (12) et le ballon (13) et dont la paroi est formée dans une matière analogue à celle qui constitue ladite enceinte, ledit logement (37) étant susceptible de contenir un getter (36).

11. Chauffe-eau solaire selon la revendication 10, caractérisé en ce que ledit getter (36) comporte une pastille de baryum et une bobine électrique (51) de vaporisation («flashage») susceptible d'être alimentée au moyen d'un flux d'induction extérieur, ledit getter étant monté sur une vis (54) en verre fixée à l'intérieur dudit logement (37).

12. Procédé de fabrication d'un chauffe-eau solaire, caractérisé par les étapes suivantes:
– On réalise séparément un cylindre de verre à section sensiblement circulaire et des calottes d'extrémité (12a, 12b) pour constituer une enceinte (2, 12),
– On réalise un ballon, également sensiblement cylindrique circulaire, mais de diamètre extérieur inférieur au diamètre intérieur de l'enceinte de l'ordre de quelques centimètres, de préférence de 1 à 3 cm inférieur,
– On équipe ce ballon (3, 13) de tuyaux d'entrée et de sortie d'eau (9, 10; 19, 20, 44, 45) avex deux extrémités faisant saillie hors du ballon (13) vers une extrémité longitudinale de ce dernier,
– On pourvoie une calotte d'extrémité (12a) de deux tubes en verre (55, 56) qui ont un diamètre légèrement supérieur auxdites deux extrémités de tuyaux (44, 45) et qui sont positionnés de façon à pouvoir les recevoir,
– On soude ladite calotte (12a) sur une extrémité dùdit cylindre en verre,
– On équipe le ballon (3, 13) de deux séries au moins d'espaceurs (16), du type ressort, que l'on assujettit à la paroi externe du ballon au moyen d'une bande (21) souple et que l'on maintient provisoirement comprimés vers ladite paroi externe du ballon par un lien souple,
– On introduit par translation axiale le ballon (3, 13) dans l'enceinte (2, 12) en libérant ledit lien quand les espaceurs (16) sont entrés dans le cylindre,
– On soude la deuxième calotte (12b) sur ledit cylindre,
– On crée un vide d'air dans l'espace (4, 14) séparant le ballon et l'enceinte, au moyen d'un tube de verre (57) traversant l'une des calottes,
– On ferme de façon étanche les deux tubes de verre précités (55, 56) sur lesdites extrémités de tuyaux (44, 45) qu'ils entourent en les chauffant localement, et
– On scelle le tube (57) de mise sous vide dudit espace (4, 14).

13. Procédé selon la revendication 12, caractérisé en ce que:
– On forme sur la paroi interne du cylindre en verre des logements (26), en creux ou en saillie, pour la réception de certains au moins desdits espaceurs (16), et
– après avoir introduit le ballon (3, 13) dans l'enceinte (2, 12) et avoir libéré ledit lien souple lorsque les espaceurs (16) sont entrés dans le cylindre, on fait tourner le ballon (3, 13) dans l'enceinte (2, 12) pour amener certains au moins de cesdits espaceurs (16a) en butée dans leurs logement (26).

14. Procédé selon la revendication 12 ou la revendication 13, caractérisé en ce qu'on parfait le vide par vaporisation («flashage») d'un getter dans l'enceinte.

**Patentansprüche**

1. Solarwassererhitzer mit direktem Wasserdurchgang zur Erhitzung und Speicherung von Wasser mit
- einem Behälter (3, 13) zur Speicherung innerhalb eines transparenten, dichten und dem atmosphärischen Druck standhaltenden Mantels (2, 12),
- einem Zwischenraum (4, 14) zwischen dem Behälter (3, 13) und dem Mantel (2, 12), in welchem Zwischenraum ein Vakuum erzeugt wird,
- mindestens zwei Leitungsverbindungen (9, 10, 19, 20) für den Wassereingang und den Wasserausgang, die an der Aussenseite des Wassererhitzers (1) münden und dicht den Mantel (2, 12) durchqueren, und mit
- mindestens zwei Reihen von Abstandsstücken (6, 16) zwischen dem Behälter (3, 13) und dem Mantel (2, 12), die zu beiden Enden des Behälters (3, 13) gelegen sind und die Dicke des Vakuumraumes (4, 14) aufrechterhalten, welcher Wassererhitzer dadurch gekennzeichnet ist, dass die Abstandsstücke die Form von Federn (16a) aufweisen und an dem Behälter (3, 13) entlang einer Aussenwand mittels eines nachgiebigen Haltebandes (21), das in üblicher Weise gespannt ist, festgepresst sind.

2. Solarwassererhitzer nach Anspruch 1, dadurch gekennzeichnet, dass die Abstandsstücke (16a) U-förmig sind und einen Grundzweig (38) aufweisen, der mit zwei Seitenzweigen (40) verbunden ist, wobei der Grundzweig (38) Druchbrüche (41) aufweist, die durch sie hindurch das nachgiebige Halteband (21) aufnehmen, das die Abstandstücke (16a) rings um den Behälter (3, 13) hält, und die Seitenzweige (40) jeweils in einem Fuss (39) enden, der in sich aufgewickelt ist.

3. Solarwassererhitzer nach Anspruch 1 oder 2, dadurch gekennzeichnet, dass er mindestens einen Sitz (26) zur Aufnahme mindestens eines der Abstandsstücke (6, 16) aufweist, welcher Sitz durch eine lokale Verformung, eine Einbuchtung oder Ausbauchung, der Innenwand des Mantels (2, 12) hergestellt ist.

4. Solarwassererhitzer nach einem der Ansprüche 1 bis 3, dadurch gekennzeichnet, dass der Mantel (2, 12) im Querschnitt kreisförmig ist und aus Borsilikatglas besteht und dass die Dicke des Raumes (4, 14) zwischen dem Behälter (3, 13) und dem Mantel (2, 12) in der Grössenordnung von einem bis einigen Zentimetern liegt.

5. Solarwassererhitzer nach einem der Ansprüche 1 bis 4, dadurch gekennzeichnet, dass der Behälter (3, 13) zur Speicherung aussenseitig mit einer selbstklebenden Selektivschicht überzogen ist.

6. Solarwassererhitzer nach einem der Ansprüche 1 bis 5, dadurch gekennzeichnet, dass Trägerfüsse (7) für den Wassererhitzer in der gleiche Vertikalebene wie die Abstandsstücke (6) angeordnet sind.

7. Solarwassererhitzer nach einem der Ansprüche 1 bis 6, dadurch gekennzeichnet, dass der innere Behälter (13) zwei Stirnwände (28, 29) aufweist, von denen mindestens eine konkav ist.

8. Solarwassererhitzer nach einem der Ansprüche 1 bis 7, dadurch gekennzeichnet, dass die Leitungsverbindungen (9, 10, 19, 20) für den Wassereingang und den Wasserausgang den Behälter (3) mit der Aussenseite des Wassererhitzers verbinden, dass der Wassereingang und/oder der Wasserausgang an sich gegenüberliegenden Enden des Behälters (13) durch nicht geradlinige Anschlüsse realisiert sind und dass die Kaltwasserleitung (20), die den Behälter (3, 13) über fast seine ganze Länge durchquert, im Innern des Behälters in Schlangen verläuft.

9. Solarwassererhitzer nach einem der Ansprüche 1 bis 8, dadurch gekennzeichnet, dass der Wassereingang und der Wasserausgang (19, 20) aus elastischen und flexiblen Verbindungsstücken (30, 31, 44, 45) besteht.

10. Solarwassererhitzer nach einem der Ansprüche 1 bis 9, dadurch gekennzeichnet, dass der Mantel (12) an einem seiner Enden auf seiner Achse eine zylindrischen, kreisförmigen Sitz (37) von verringertem Durchmesser aufweist, der mit dem Vakuumraum (14) zwischen dem Mantel (12) und dem Behälter (13) in Verbindung steht, und dessen Wandung aus einem Material analog zu dem Material des Mantels besteht, welcher Sitz (37) geeignet ist, ein Getter (36) aufzunehmen.

11. Solarwassererhitzer nach Anspruch 10, dadurch gekennzeichnet, dass das Getter (36) eine Bariumpille und eine elektrische Verdampfungsspule (51) («flashage») enthält, die durch einen äusseren Induktionsfluss speisbar ist, und dass das Getter auf einer Glasschraube (54) befestigt ist, die im Innern des Sitzes (37) angeordnet ist.

12. Verfahren zur Herstellung eines Solarwassererhitzers, gekennzeichnet durch folgende Verfahrensschritte:
- man stellt getrennt einen Glaszylinder mit im wesentlichen kreisförmigen Querschnitt und Abschlusshauben (12a, 12b) zur Erzeugung eines Mantels (2, 12) her,
- man stellt eine Behälter her, ebenfalls im wesentlichen kreisförmig zylindrisch, dessen Aussendurchmesser jedoch grössenordnungsmässig um einige Zentimeter, vorzugsweise um 1 bis 3 cm kleiner als der Innendurchmesser des Mantels ist,
- man stattet den Behälter (3, 13) mit Wassereingangs- und Wasserausgangsleitungen (9, 10; 19, 20, 44, 45) mit zwei über den Behälter (13) in Richtung auf ein longitudinales Ende hinausstehenden Enden aus,
- man versieht eine Abschlusshaube (12a) mit zwei Glasrohren (55, 56), die einen Durchmesser haben, der etwa grösser als der der beiden Enden der Leitungen (44, 45) ist, und die so angeordnet sind, um diese aufzunehmen,
- man schweisst die Haube (12a) auf ein Ende des Glaszylinders,
- man stattet den Behälter (3, 13) mit mindestens zwei Serien von federartigen Abstandsstücken (16) aus, die man an der Aussenwand des Behälters mittels eines nachgiebigen Bandes (21) festspannt und die man provisorisch gegen die Aussenwand mittels eines nachgiebigen Gurtes angedrückt hält,
– man führt durch eine axiale Verschiebung den Behälter (3, 13) in den Mantel (2, 12) ein, wobei der Gurt gelöst wird, wenn die Abstandsstücke in den Zylinder eingeführt sind,
– man schweisst die zweite Haube (12b) auf den Zylinder,
– man erzeugt ein Vakuum in dem Raum (4, 14) zwischen dem Behälter und dem Mantel, mittels eines Glasrohres (57), das durch eine der Hauben verläuft,
– man verschliesst dicht die vorgenannten Glasrohre (55, 56) auf den Enden der Leitungen (44, 45), die sie umgeben, indem man sie lokal erwärmt und
– man schmilzt das Evakuierungsrohr (57) des Raumes (4, 14) ab.

13. Verfahren nach Anspruch 12, dadurch gekennzeichnet,
– dass man auf der Innenwand des Glaszylinders (26) Sitze, eingebuchtet oder ausgebaucht, ausbildet, zur Aufnahme von mindestens einigen der Abstandsstücke (16) und
– dass man nach dem Einführen des Behälters (3, 13) in den Mantel (2, 12) und dem Lösen des nachgiebigen Gurtes, nachdem die Abstandsstücke (16) in den Mantel eingeführt sind, den Behälter (3, 13) in dem Mantel (2, 12) dreht, um wenigstens einige der Abstandsstücke (16a) zum Anschlag an ihrem Sitz (26) zu bringen.

14. Verfahren nach Anspruch 12 oder 13, dadurch gekennzeichnet, dass man das Vakuum durch Verdampfung («flashage») eines Getters in dem Mantel vervollständigt.

## Claims

1. Solar water heater for heating and storing water by the direct passage of the water of the type comprising:
– a storage tank (3, 13) located inside a transparent and leakproof chamber (2, 12) which is resistant to atmospheric pressure,
– an intermediate space (4, 14) arranged between the said tank (3, 13) and the chamber (2, 12), in which space an air void has been formed,
– at least two inlet and outlet hydraulic connections (9, 10, 19, 20) for the water which give out onto the outside of the water heater (1) whilst traversing the chamber (2, 12) in a leakproof manner and
– at least two series of spacers (6, 16) disposed between the tank (3, 13) and the chamber (2, 12) and located towards the two ends of the tank (3, 13), maintaining the thickness of the said empty space (4, 14), the said water heater being characterised in that the said spacers are provided in the form of springs (16a) and are secured to the tank (3, 13), about its external wall by means of a suitably tensioned flexible holding strip (21).

2. Solar water heater according to claim 1, characterised in that the said spacers (16a) have the general shape of a U comprising a bottom branch (38) connected by two side branches (40), the said bottom branch (38) having notches (41) capable of receiving across themselves, the said flexible holding strip (21) for the spacers (16a) about the tank (3, 13) and the said side branches (40) each one of which terminates in a foot (39) wound on itself.

3. Solar water heater according to claim 1 or claim 2, characterised in that it comprises at least one housing (26) provided for receiving one at least of the said spacers (6, 16), the said housing being formed by local forming as a hollow or protrusion of the internal wall of the chamber (2, 12).

4. Solar water heater according to any one of claims 1 to 3, characterised in that the chamber (2, 12) is of circular section and is made of borosilicate glass, the thickness of the said space (4, 14) separating the tank (3, 13) and the chamber (2, 12) being of the order of 1 to a number of centimets.

5. Solar water heater according to any one of claims 1 to 4, characterised in that the storage tank (3, 13) is covered on the outside with a selfadhesive selective film.

6. Solar water heater according to any one of claims 1 to 5, characterised in that support feet (7) of the water heater are placed in the same vertical plane as the spacers (6).

7. Solar water heater according to any one of claims 1 to 6, characterised in that the internal tank (13) has two bottom pieces (28, 29), at least one of which (28) is of concave shape.

8. Solar water heater according to any one of claims 1 to 7, characterised in that the hydraulic inlet and outlet connections (9, 10, 19, 20) for the water connect the tank (3) to the outside of the water heater, the said inflow and/or outflow of water being effected towards the opposite ends of the tank (13) through nonrectilinear connections, the cold water pipe (20) which traverses the tank (3, 13) taking on a winding formation inside the latter over almost its complete length.

9. Solar water heater according to any one of claims 1 to 8, characterised in that the water inlets and outlets (19, 20) are formed from flexible elastic connections (30, 31, 44, 45).

10. Water heater according to any one of claims 1 to 9, characterised in that the chamber (12) has at one of its ends, in its axis, a circular cylindrical housing (37) of reduced diameter which communicates with the vacuum space (14) between the chamber (12) and the tank (13) and the wall of which is formed in a similar manner to that forming the said chamber, whereby the said housing (37) is capable of containing a getter (36).

11. Solar water heater according to claim 10, characterised in that the said getter (36) has a barium tablet and an electric vaporisation coil (51) («flashage») which is capable of being supplied by means of an external induced flux, the said getter being fitted onto a glass screw (54) fixed to the inside of the said housing (37).

12. Process for manufacturing a solar water heater, characterised by the following steps:

– A glass cylinder of substantially circular section and end caps (12a, 12b) to make up a chamber (2, 12) are produced separately.

– A tank is produced which is also substantially circular and cylindrical but of outside diameter which is less than the inside diameter of the chamber by an amount of a few centimeters, preferably being smaller by 1 to 3 cm.

– This tank (3, 13) is provided with water inlet and outlet pipes (9, 10; 19, 20, 44, 45) with two ends protruding out of the tank (13) towards a longitudinal end of the tank.

– An end cap (12a) of two glass tubes (55, 56) is provided, whereby the two glass tubes have a diameter which is slightly greater than the said two pipe ends (44, 45) and are positioned in such a way as to be capable of receiving them.

– The said cap (12a) is welded onto an end of the said glass cylinder.

– The tank (3, 13) is provided with two series at least of spacers (16) of the spring type which are secured to the external wall of the tank by means of a flexible strip (21) and which are help provisionally compressed towards the said exernal wall of the tank with a flexible link.

– The tank (3, 13) is introduced into the chamber (2, 12) by an axial translational movement by releasing the said link when the spacers (16) have been introduced into the cylinder.

– The second cap (12b) is welded onto the said cylinder,

– An air void is created in the space (4, 14) separating the tank and the chamber by means of a glass tube (57) which traverses one of the caps,

– The two above-mentioned glass tubes (55, 56) are closed in a leakproof manner on the said ends of the pipes (44, 45) which they surround whilst heating them locally and

– the tube (57) used for placing the said space (4, 14) under vacuum is sealed.

13. Process according to claim 12, characterised in that:

– housings (26) as a hollow or a protrusion for receiving certain at least of the said spacers (16) are formed on the internal wall of the cylinder made of glass and,

– after the tank (3, 13) has been introduced into the chamber (2, 12) and the said flexible link has been released when the spacers (16) have been introduced into the cylinder, the tank (3, 13) is made to turn in the chamber (2, 12) so as to bring certain at least of these said spacers (16a) to form abutments in their housing (26).

14. Process according to claim 12 or claim 13, characterised in that the vacuum is completed by vaporisation («flashage») of a getter in the chamber.

FIG_1

FIG_2

FIG.3

FIG.4

FIG.5

0 148 695

0 148 695

FIG.6

FIG.7

FIG.9

FIG.8

15

FIG. 10

FIG. 11

FIG_12

FIG_13

FIG_14

FIG_15

FIG_17

FIG_16

FIG_18